Europäisches Patentamt

European Patent Office

Office européen des brevets

(11) Veröffentlichungsnummer: **0 354 496**
**A2**

(12) # EUROPÄISCHE PATENTANMELDUNG

(21) Anmeldenummer: 89114479.2

(51) Int. Cl.⁴: **B23Q 5/08 , B23Q 1/08**

(22) Anmeldetag: 04.08.89

(30) Priorität: 08.08.88 DE 8810092 U

(43) Veröffentlichungstag der Anmeldung:
14.02.90 Patentblatt 90/07

(84) Benannte Vertragsstaaten:
CH DE ES FR GB IT LI

(71) Anmelder: MAHO Aktiengesellschaft
Postfach 1280 Tiroler Strasse 85
D-8962 Pfronten(DE)

(72) Erfinder: Babel, Werner
Achweg 19
D-8962 Pfronten(DE)
Erfinder: Grund, Peter, Dr.
Bergblickstrasse 13
D-8959 Rieden(DE)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) Arbeitsspindel für Fräs- und Bohrmaschinen.

(57) Gegenstand der Erfindung ist eine Spindeleinheit
für Fräs und Bohrmaschinen, bestehend aus einem
hohlzylindrischen Gehäuse, in dem der hohlzylindrische Stator des elektrischen Antriebsmotors befestigt und in dessen Stirnwänden der mit dem Spindelschaft der Arbeitsspindel in Antriebsverbindung
stehende Rotor des Antriebsmotors drehbar gelagert
ist.
Gemäß der Erfindung ist der Rotor (10) auf einer in
den stirnwänden (2, 3) des Gehäuses drehbaren
Lagerhülse (12) fest montiert. Der Spindelschaft (18)
ist in der Lagerhülse (12) drehbar gelagert und steht
über ein Getriebe (21 bis 31) mit dieser Lagerhülse
(12) in Antriebsverbindung.

Fig.1

## Arbeitsspindel für Fräs- und Bohrmaschinen

Die Erfindung betrifft eine Arbeitsspindel mit integriertem Antriebsmotor für Fräs- und Bohrmaschinen, bestehend aus einem hohlzylindrischen Gehäuse, an dessen Innenwand der hohlzylindrische Stator des elektrischen Antriebsmotors befestigt und in dessen Stirnwänden der mit dem Spindelschaft in Antriebsverbindung stehende Rotor des elektrischen Antriebsmotors drehbar gelagert ist.

Derartige Arbeitsspindeln mit integriertem Antriebsmotor werden derzeitig in verschiedenen Ausführungen eingesetzt, um hohe Spanleistungen bei der Bearbeitung von insbesondere weicheren Nichteisen-Werkstücken eingesetzt Durch die integrierte Bauweise von Spindelschaft und Antriebsmotor können Drehzahlen bis zu einigen 10.000 Upm erzielt werden. Nachteilig bei diesen Schnellauf-Arbeitsspindeln ist jedoch die durch die hohen Drehzahlen bedingte aufwendige Lagerung des mit dem Rotor drehfest verbundenen Spindelschaftes. Um in den hohen Drehzahlbereichen Schwingungen und Vibrationen möglichst gering zu halten, müssen Präzisionslager eingesetzt werden, die durch Ölnebel oder Flüssigöl geschmiert und ausreichend gekühlt werden, um eine übermäßige Erwärmung der Lager zu vermeiden. Darüber hinaus werden für die Bearbeitung unterschiedlicher Werkstücke mit jeweils optimalen Drehzahlen relativ aufwendige Hochfrequenzregelungen für die Antriebsmotoren eingesetzt.

Aufgabe der Erfindung ist es, eine Schnellauf-Arbeitsspindel mit integriertem Antriebsmotor zu schaffen, die den Einsatz einfacher Antriebsregler und robuster fettgeschmierter Spindellager ermöglicht.

Diese Aufgabe wird erfindungsgemäß dadurch gelöst, daß der Rotor des Antriebsmotors auf einer Lagerhülse fest montiert ist und daß der Spindelschaft in dieser Lagerhülse drehbar gelagert ist sowie über ein Getriebe mit dieser Lagerhülse in Antriebsverbindung steht.

Durch die drehbare Lagerung des Spindelschaftes in der Lagerhülse und durch das diese beiden Bauteile verbindende Getriebe werden die hohen Drehzahlen der Arbeitsspindel im Verhältnis der Getriebe-Übersetzung hinsichtlich der verwendeten Lager aufgeteilt, d. h. die Lager zwischen dem Spindelschaft und der Lagerhülse müssen nur noch auf die Relativdrehzahlen zwischen beiden Bauteilen ausgelegt werden, was in entsprechender Weise auch für die Lager der Lagerhülse in den Stirnwänden des Gehäuses gilt. Da der mit der Lagerhülse zusammengebaute Rotor des Antriebsmotors mit entsprechend dem Getriebe-Übersetzungsverhältnis verringerten Drehzahlen umläuft, vereinfacht sich auch die Motorsteuerung. Als Resultat können herkömmliche fettgeschmierte Lager für die Lagerungen des Spindelschaftes und der Lagerhülse sowie herkömmliche Motorsteuerungen eingesetzt werden.

Eine stabile und schwingungsarme Lagerung der drehenden Bauteile ergibt sich bei einer zweckmäßigen Ausgestaltung der Erfindung dadurch, daß die Lager des Spindelschaftes in etwa den gleichen Querebenen wie die in den Stirnwänden des Gehäuses montierten Lager der Lagerhülse angeordnet sind.

Eine weitere Vereinfachung der Motorsteuerung kann erreicht werden, wenn das Getriebe als mehrstufiges Schaltgetriebe ausgebildet wird.

Aus Platzgründen empfiehlt es sich, das Getriebe an einem stirnseitigen Ende der Lagerhülse in einem Gehäusefortsatz anzuordnen, wobei dieses Getriebe ein mit der Lagerhülse fest verbundenes Hohlrad enthalten kann, das über schaltbare Zahnritzel mit mindestens einem Zahnrad auf dem Spindelschaft in Antriebsverbindung steht.

Weitere Merkmale und Vorteile ergeben sich aus der folgenden Beschreibung eines bevorzugten Ausführungsbeispiels anhand der Zeichnung. Es zeigen:

Fig. 1 eine Spindeleinheit im Axialschnitt;

Fig. 2 das Schaltgetriebe im Querschnitt A-A in Fig. 1;

Fig. 3 das Schaltgetriebe im Querschnitt in der zweiten Schaltstellung.

Die dargestellte Spindeleinheit enthält ein Spindelgehäuse, bestehend aus einem hohlzylindrischen Mantel 1, zwei mit diesem verbundenen Stirnwänden 2, 3 und einem deckelartigen Gehäusefortsatz 4. In einer mit dem Mantel 1 und den beiden Stirnwänden 2, 3 fest verbundenen Buchse 5 sind Ringkanäle 6 ausgebildet. An der Innenwand dieser Buchse 5 ist über eine Zwischenschicht 7 der Stator 8 des Antriebsmotors der zentralen Arbeitsspindel 9 befestigt. Im hohlzylindrischen Stator 8 läuft der Rotor 10 des Antriebsmotors, der über eine Buchse 11 drehfest auf einer Lagerhülse 12 befestigt ist. Die den Rotor an beiden Enden überragende Lagerhülse 12 weist radial erweiterte Endstücke 13, 14 auf, die über je ein Doppellager 15, 16 in zentralen Durchbrüchen der beiden Stirnwände 2, 3 gelagert sind Bei diesen Lagern 15, 16 handelt es sich um herkömmliche ölgeschmierte Wälzlager. Wie dargestellt, ist der Schaft 18 der Arbeitsspindel 9 in den erweiterten Endabschnitten 13, 14 der Lagerhülse 12 durch je ein Doppellager 19, 20 gelagert.

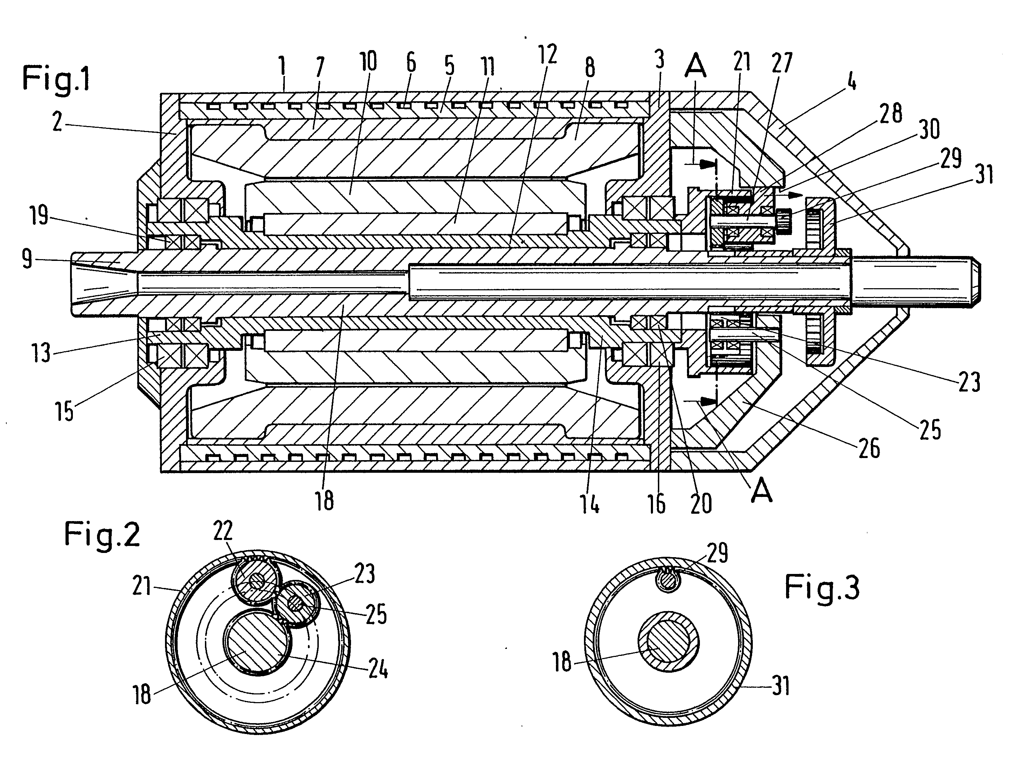

Im rechten Teil der Fig. 1 sowie in den Fig. 2 und 3 ist eine Ausführung eines Schaltgetriebes dargestellt, das ein mit dem erweiterten Endteil 14 drehfest verbundenes Hohlrad 21 aufweist. Mit der Verzahnung dieses Hohlrads 21 steht die Verzahnung eines Ritzels 22 in ständigem Eingriff, das in der Schaltstellung nach Fig. 2 wiederum mit einem Zwischenrad 23 kämmt. Auf dem innerhalb des Gehäusefortsatzes 4 befindlichen Teil des Spindelschaftes 18 ist eine Verzahnung 24 ausgebildet, in die - in der Schaltstellung nach Fig. 2 - das Zwischenrad 23 eingreift. Dieses Zwischenrad 23 ist auf einem Zapfen 25 drehbar gelagert, der in einem an der Gehäusestirnwand 3 befestigten und innerhalb des Gehäuseansatzes 4 angeordneten Halter 26 befestigt ist. Das mit der Hohlrad-Verzahnung kämmende Stirnrad 22 ist auf einer Welle 27 befestigt, die in einem Schieber 28 drehbar gelagert ist und an ihrem aus dem Schieber 28 herausragenden Ende ein Zahnritzel 29 trägt. Der Schieber 28 ist mit einem radialen Ansatz an einer achsparallelen Fläche 30 des Käfigs 26 axial geführt und kann - durch nicht dargestellte Mittel - aus der in Fig. 1 dargestellten Lage nach rechts verschoben werden, wodurch das Zahnritzel 29 mit der Innenverzahnung eines auf dem Spindelschaft 18 befestigten Hohlrades 31 in Eingriff gelangt, wie dies in Fig. 3 dargestellt ist. In dieser Schaltstellung wird die Drehbewegung des Rotors 10 über die Lagerhülse 12, deren Hohlrad 21, das Stirnrad 22, die Welle 27, das Stirnritzel 29 und das Hohlrad 31 auf den Spindelschaft 18 der Arbeitsspindel 9 übertragen, wobei das Übersetzungsverhältnis 1 oder auch < 1 sein kann, was eine Werkstückbearbeitung mit gegenüber den Rotor-Drehzahlen verringerten Drehzahlen und entsprechend vergrößertem Drehmoment ermöglicht.

Die Erfindung ist nicht auf das dargestellte Ausführungsbeispiel beschränkt. So können beispielsweise statt des dargestellten Stirnradgetriebes auch Planetengetriebe oder andere geeignete Getriebetypen verwendet werden.

**Ansprüche**

1. Spindeleinheit für Fräs- und Bohrmaschinen, bestehend aus einem hohlzylindrischen Gehäuse, in dem der hohlzylindrische Stator des elektrischen Antriebsmotors befestigt und in dessen Stirnwänden der mit dem Spindelschaft der Arbeitsspindel in Antriebsverbindung stehende Rotor des Antriebsmotors drehbar gelagert ist,
**dadurch gekennzeichnet,**
daß der Rotor (10) auf einer in den Stirnwänden (2, 3) des Gehäuses drehbaren Lagerhülse (12) fest montiert ist und
daß der Spindelschaft (18) in der Lagerhülse (12) drehbar gelagert sowie über ein Getriebe (21 bis 31) mit dieser Lagerhülse (12) in Antriebsverbindung steht.

2. Arbeitsspindel nach Anspruch 1,
dadurch gekennzeichnet,
daß die Lager (19, 20) des Spindelschafts (18) in den gleichen Querebenen wie die in den Stirnwänden (2, 3) des Gehäuses montierten Lager (15, 16) der Lagerhülse (12) angeordnet sind.

3. Arbeitsspindel nach Anspruch 1 oder 2,
dadurch gekennzeichnet,
daß das Getriebe ein mehrstufiges Schaltgetriebe ist.

4. Arbeitsspindel nach einem der Ansprüche 1 bis 3,
dadurch gekennzeichnet,
daß das an einem stirnseitigen Ende der Lagerhülse (12) in einem Gehäusefortsatz (4) angeordnete Getriebe ein mit der Lagerhülse (12) fest verbundenes Hohlrad (21) enthält, das über schaltbare Zahnräder (22, 23, 29) mit Verzahnungen (24, 31) auf dem Spindelschaft (18) in Antriebsverbindung steht.

Fig.1

Fig.2

Fig.3

EP 0 354 496 A2